# EUROPEAN PATENT APPLICATION

(11) **EP 0 709 798 A1**
(43) Date of publication of application: **01.05.1996**
(21) Application number: 95202098.0
(22) Date of filing: 01.08.1995
(51) Int. Cl.: G06K 7/10

(54) **Wand scanner with a sensor supported by a hole in illuminating optics**

(30) Priority: 21.09.1994 EP 94202705
(71) Applicant: OPTICON SENSORS EUROPE B.V., NL-2132 NG Hoofddorp (NL)
(72) Inventor: Peng, Ke-Ou, NL-2612 KV Delft (NL)
(74) Representative: de Bruijn, Leendert C.

(57) **Abstract**

An optical scanner including a light source (1) for generating a light beam (A), illuminating optics (2/10; 30/40; 20; 3; 35; 11/12) having an optical axis (15) and including a first surface (10a; 40a; 20a; 3a; 35a; 12a) arranged for receiving said light beam (A) from said light source (1), and a second surface (2b; 30b; 20b; 3b; 35b; 11b) arranged for transmitting said light beam (A) and focussing it to a working range on said optical axis (15), imaging optics (16; 30b/30d; 20b/20d; 5; 35e/35d; 11) located on said optical axis (15) and arranged for imaging light reflected by an object (C) to a sensor (9), both said light source (1) and said sensor (9) being located substantially on said optical axis (15) wherein the illuminating optics (2/10; 30/40; 20; 3; 35; 11/12) is provided with a hole (2c; 30c/40c; 20c; 3c; 35c; 12c) around the optical axis (15) and the sensor (9) is supported by said hole.

## Description

The present invention relates to an optical scanner comprising a light source for generating a light beam, illuminating optics having an optical axis and comprising a first surface arranged for receiving said light beam from said light source, and a second surface arranged for transmitting said light beam and focusing it to a working range on said optical axis, imaging optics located on said optical axis and arranged for imaging light reflected by an object to a sensor, both said light source and said sensor being located substantially on said optical axis. Such an optical scanner is known from European patent application EP-A-0.197.673.

Because of low cost, simple and compact structure, wand scanners have been widely applied for e.g. bar code reading. Basically, such scanners comprise a light source, a light detector and corresponding optics in a wand-light housing.

In practice, a high reading resolution in a large longitudinal working range is required. It may, for instance, be required that a bar code of high density located on a back side of a transparant cover needs to be read.

Most wand-type scanners are pen-like and have a rotation-symmetrical optical axis, called the wand axis. Wand scanners are preferred to be able to read objects at an arbitrary angle relative to their wand axis. Therefore, the spatial resolution and the illumination point in the longitudinal working range are preferred to be rotation independent.

A wand scanner that can read objects at an arbitrary rotation angle with constant resolution is disclosed in the European patent application 0.197.673, referred to above. The embodiment shown in figure 4 of this European patent comprises two lenses, both located on an optical axis. A light source is also located on the optical axis. Also a detector used for detecting an object, e.g. a barcode, is located on the optical axis. The sensor to be located on the optical axis has the advantage that the reading of objects is indifferent for the location within the working range. Moreover, focusing the light beam reflected by an object to a point on the optical axis avoids the introduction of additional non-axial abberations and enhances the spatial resolution.

In order to obtain these advantages, the sensor has to be aligned on the optical axis very accurately. EP-A-0.197.673 does not indicate any special means for such an alignment.

The object of the present invention is to provide a wand-type scanner of the kind defined by the preamble of claim 1 which is designed in such a way that the alignment of the sensor on the optical axis is very easy and very accurate.

Therefore, the illuminating optics of the optical scanner according to the invention comprise a hole around the optical axis and the sensor is supported by said hole. Such a hole can be easily drilled or cut in the illuminating optics and can be easily matched to the size of the sensor used.

The sensor may be gripped by the hole directly. However, as an alternative the sensor may be supported by supporting means gripped by the hole.

The illuminating optics of the optical scanner may comprise a first lens and a second lens, which second lens is nearest to the light source. In such an embodiment the hole for supporting the sensor may be made in the first lens and/or in the second lens.

Although the first lens be made of glass or plastic and it may be shaped in any shape desired, it is preferably selected to be one of the following group of lenses: a ball lens, a Fresnel lens, a holographic lens and a gradient index lens. Alternatively, the first lens is a ball lens having a diameter of not less than 5 mm and being made of either sapphire or ruby.

In a further embodiment the illuminating optics comprise a single, elongated lens.

The imaging optics may comprise a separate imaging lens on the optical axis between the hole and working range.

However, as an alternative, the imaging optics may comprise an imaging lens on the optical axis between the hole and the working range, which imaging lens is integrally made with the illuminating optics.

The imaging optics may comprise either a Fresnel lens, a holographic lens or a gradient index lens.

In the embodiment in which a single, elongated lens is applied, alignment of the different elements is relatively easy: the sensor has only to be put into the hole of the elongated lens, which automatically leads to the required alignment, and the light source has to be aligned with the elongated lens. Moreover, in such an embodiment a separate housing for supporting two or more lenses and a separate sensor can be dispensed with.

In all the embodiments according to the present invention, no special supporting means are necessary to keep the sensor aligned with the illuminating optics and the imaging optics.

The invention will now be explained with reference to the accompanying drawings, in which some examples of the present invention are shown and in which:
figure 1a shows a first embodiment of the present invention in which the illuminating optics comprise two lenses;
figure 1b schematically shows the application of a Fresnel lens, holographic lens or gradient index lens (GRIN) as an alternative for the application of glass-type lenses;
figure 2 shows an alternative embodiment, in which the illuminating optics comprise two lenses;
figures 3, 4a, 4b show embodiments in which the illuminating optics comprise one single, elongated lens;
figure 5 shows a further embodiment in which the illuminating
optics comprise two lenses, one of which is a ball-type lens.

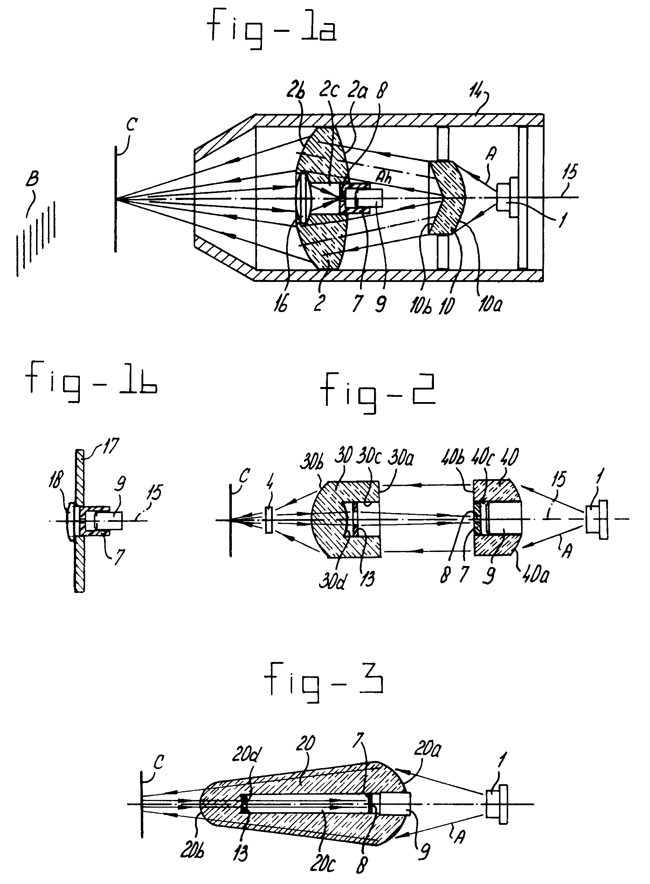

The embodiment of the present invention shown in figure 1a, is equal to the optical scanner already shown in figure 3a of European patent application 9420275.3, filed on September 21, 1994, the priority of which is claimed.

The embodiment of figure 1a comprises a diverging axicon 10, which is used to reflect light generated by a light source 1 from the axis of symmetry to form a hollow light cone, which allows the imaging optics and the sensor 9 to be disposed at the optical axis 15 without disturbing the illumination light beam generated by the light source 1.

The light beam A, which may be a beam from a light emitting diode (LED), is refracted by the refractive axicon 10, acting as a diverging component in order to form a hollow conic beam Aₕ. The hollow conic beam Aₕ will be received by lens surface 2a of lens 2 and focused by lens surface 2b, preferably with a tubular light spot, in a pre-determined working range on the optical axis 15. The lens 2 comprises a hole 2c for passing light reflected by an object C to be scanned. The object C to be scanned may comprise a bar code B to be detected. Because the beam Aₕ has a hollow conic shape it is possible to dispose an imaging lens 16 and the sensor 9 at the optical axis 15 such that neither the imaging lens 16 nor the sensor 9 shut off any part of the illumination light beam. In front of the sensor 9 an opaque screen 7 with a small opening 8 is disposed, substantially on optical axis 15. The opaque screen 7 grips the sensor 9 and is accommodated and supported by the opening 2c of the lens 2. The sizes of the hole 2c and the shape of the opaque screen 7 can be easily matched to one another and to the size of the sensor 9. Therefore, the alignment of the sensor 9 on the optical axis 15 is very easy. No special supporting means fixed to the housing 14 are necessary for a proper alignment. As an alternative to the embodiment shown in figure 1a, the sensor 9 may be directly gripped by the opening 2c of lens 2.

When the illuminating spot on object C is very small such that it can scan e.g. the bar code B the opaque screen 7 with the small opening 8 can be dispensed with. Then, the sensor, can be directly accommodated in and supported by the hole 2c. However, in most wand-type scanners the illumination spot has a size such that it cannot be used directly to scan bar codes. Then, opaque screen 7 with opening 8 is needed. This applies to all wand-type scanners shown in figures 1a through 5.

The longitudinal working range of the wand scanner according to figure 1a mainly depends on the effective aperture of the imaging optics, e.g. the hole 2c of the lens 2. An additional diaphragm (not shown in figure 1a) behind lens 16 may be used to change the affective aperture if desired.

For more details regarding the special shape of axicon 10 and of lens 2, the reader is referred to the description of European patent application 9420275.3 with respect to figure 3a, which description is incorporated herein by reference.

Figure 1b schematically shows an alternative for the application of a lens 2, as shown in figure 1a. In figure 1b the lens 2 is substituted by alternative illuminating optics 17, which may be a Fresnel lens, a holographic lens or a gradient index lens (GRIN). Also shown is that the imaging lens 16 may be substituted by other imaging lens means 18, like a Fresnel lens, a holographic lens or a gradient index lens (GRIN). Such alternatives are known to persons skilled in the art and need no further explanation. The Fresnel lens or holographic lens or GRIN lens 17, comprises a similar hole like hole 2c for supporting the opaque screen 7 which internally supports the sensor 9.

Figure 2 shows another embodiment in which two illuminating lenses 30, 40 are used. There are three differences with the embodiment according to figure 1a. First of all, a collimating lens 40 is used instead of axicon 10 and secondly, an imaging lens having a front surface 30b and a rear surface 30d is integrally made with the lens 30. Thirdly, the collimating lens 40 is provided with a hole 40c in which the sensor 9 and the opaque screen 7 with the small opening 8 are located. It is to be understood that lens 40 need not be collimating. The arrangement according to figure 2 also works if lens 40 is an axicon like in the embodiment according to figure 1a. The collimating lens 40 comprises a first surface 40a for receiving the light beam A from the light source 1. Moreover, the collimating lens 40 comprises a second surface 40b for transmitting the collimated light beam to a receiving surface 30a of the lens 30.

Lenses 30 and 40 may be manufactured partly identically. I.e., during manufacturing lens 40 may have a shape identical to lens 30 as an intermediate step. To form lens 40, then, the central part of the lens closing the blind hole similar to blind hole 30c is drilled to make through hole 40c. In this case, a single mould can be used to form lenses 30 and 40 if they are made of plastic.

The surface 30b of the lens 30 is arranged for both transmitting and focusing the light beam to object C and receiving light reflected by object C. When the surface 30b is intended to touch an object to be scanned, it is preferably coated with a hard film like diamond. Alternatively, a planar window 4 may be located in front of the lens surface 30b.

The lens 30 is provided with a blind hole 30c aligned with hole 40c in lens 40 along the optical axis 15.

A diaphragm 13 having an opening on the optical axis 15 may be used in the blind hole 30c to adjust the depth of field. However, the diaphragm 13 may be omitted in which case the blind hole of the lens 30 may act as the diaphragm of the imaging optics. Preferably, the small opening 8 in the opaque screen 7 is a pin-hole type of opening which improves the spatial resolution without the need of applying a very small sized sensor. Besides, the spatial resolution is no longer determined by the spot size of the beam within the working range. Therefore, the light source 1 does not need to be a laser source or an expensive LED having a very small light point.

The surface 30d is curved such that the image of the object C has a minimum abberation.

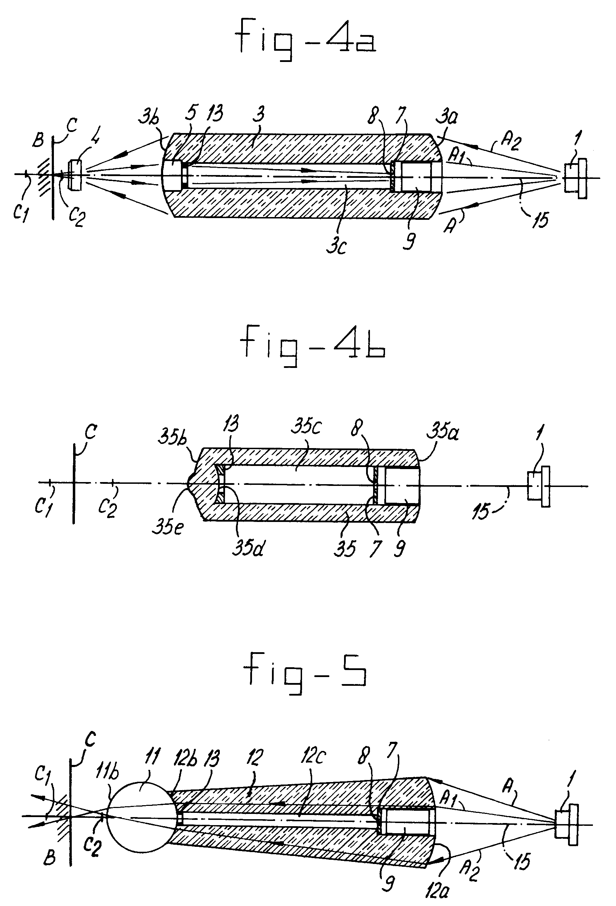

In the embodiments according to figures 1a, 1b, and 2 at least two lenses have to be aligned on the optical axis 15. Figures 3, 4a, 4b show alternative embodiments in which probably one single elongated lens is used, thus simplifying alignment. The advantage of the embodiments according to figures 1a, 1b, and 2 relative to the embodiments of figures 3, 4a, and 4b is that the light beam A propagates a shorter distance through lens material, thus resulting in less light absorbtion.

Single lens 20 in figure 3 has a first surface 20a for receiving the light beam A generated by the light source 1. Surface 20a directs the light beam to a second surface 20b which may be a ball segment. The surface 20b focuses the light beam A in the working range to scan an object C. Light reflected by object C is received by the surface 20b and directed to a surface 20d which is the bottom of a blind hole 20c in the lens 20. The center part of lens 20 with surfaces 20b and 20d acts as an imaging lens to focus the light reflected by object C to the sensor 9 through the opaque screen 7 with the small opening 8. Again, a diaphragm 13 may be arranged in the blind hole 20c just behind the surface 20d. In the arrangement according to figure 3, one only has to align the axis of symmetry of the lens 20 to the optical axis 15 of the system shown.

The surface 20b may be the outer surface of the scanner which touches the object C when scanning it. However, the surface 20b may not be damaged by such a touch. In return, the object C may not be damaged by the touch to the surface 20b. Consequently, the surface 20b, preferably, is made of a very hard material. To avoid high costs for the entire lens 20, the lens 20 itself may be made of a suitable low-cost material like glass or plastics, whereas the surface 20b is coated by a hard material, such as diamond.

Figure 4a shows an alternative to the embodiment according to figure 3. In the embodiment according to figure 4a the single illuminating lens 3 has a receiving surface 3a for receiving the light beam A generated by the light source 1 and directing it as a collimated beam to a second surface 3b. The second surface 3b is dimensioned to transmit the beam A and focus it to the object C, e.g., provided with a bar code B to be detected. In front of the surface 3b a planar window for may be applied. Like in the arrangement according to figure 3, in the embodiment according to figure 4a the sensor 9 is supported by and accomodated in a hole 3c in the lens 3. The lens 3 has its axis of symmetry aligned with the optical axis 15. Whereas the sensor 9 may be arranged at the rear side of the hole 3c, a separate imaging lens 5 may be arranged at the front side of hole 3c. Behind the imaging lens 5, again, a diaphragm 13 may be used. The imaging lens 5 focuses the light reflected by object C to the opaque screen 7 through the small opening 8 to the sensor 9.

In order to convert the light beam A generated by the light source 1 into a collimated beam within the lens 3, the lens surface 3a will be hyperbolic and the light source 1 will be located at the focal point of surface 3a.

The curvature of the surface 3b of lens 3 can be designed to be spherical or aspherical such that ray A1 of the light beam A which propagates within the lens 3 near the inner surface of hole 3c is focused by surface 3b to a point C1, and that ray A2 of the light beam A which propagates at the outer surface of the lens 3 is focused by the surface 3b to a point C2 which is closer to the lens 3 than point C1. By arranging the surface 3b in such a way a large longitudinal working field is obtained. Surfaces 2b and 30b of the embodiments according to figure 1a and 2, respectively, may be shaped in the same way as surface 3b to establish such a large working range.

If the planar window 4 is applied which is preferably made of sapphire.

Figure 4b shows an alternative single lens 35 which may be used instead of the single lens 3 and the separate lens 5. The lens 35 has a receiving surface 35a similar to receiving surface 3a of lens 3. However, instead of a separate lens 5 at the front of the opening 3c, in the embodiment according to figure 4b the front, center part of the lens 35, although being shaped like the lens 5, is an integral part of the lens 35. This center part has a front surface 35e for receiving the light reflected by the object C and a rear surface 35d for focusing the reflected light to the sensor 9. Thus, the lens 35 comprises a front surface with sub parts 35b and 35e. The sub part 35b is only used for illuminating the object C whereas the sub part 35e is only used for receiving the light reflected by object C.

Again the diaphragm 13 may be arranged behind the surface 35d However, it may be omitted in which case the hole 35c itself acts as a diaphragm.

The receiving surface 35a may be hyperbolic. The surface 35b may be designed to be spherical or aspherical to establish a large working range between the points C1 and C2, like the surface 3b in the embodiment according to figure 4a. The curvature of the surface 35e may be equal to the curvature of surface 35b such that the transition is not visible. In that case, however, the curvature of the surface 35d must be curved such that the image of the object C is minimized.

Figure 5 shows another embodiment according to the invention. An allongated lens 12 has a receiving surface 12a for receiving the light beam A generated by the light source 1. The lens 12 comprises a hole 12c at the rear side of which the sensor 9 and the opaque screen 7 with the small opening 8 are located.

The elongated lens 12 has a front surface 12b which is shaped like the inner surface of a ball with a pre-determined diameter. A ball-type lens 11 with the same diameter is located in front of the elongated lens 12 and preferably touches the front surface 12b. Since the front surface 12b is adapted to the ball surface of the ball-type lens 11 the center of the ball-type lens 11 is automatically aligned with the axis of symmetry of the elongated lens 12. Therefore, although the embodiment according to figure 5 comprises two lenses only the light source 1 has to be aligned to the axis of symmetry of the elongated lens 12.

The ball-type lens 11 is preferably made of a very hard material like sapphire or, alternatively, of glass/plastic coated with diamond. Instead of sapphire, ruby may be used.

When the ball-type lens 11 is made of sapphire it has a high refractive index of 1,75. The focal point is close to the lens 11. When, for instance, a ball lens 11 with a diameter of 5 mm is used, the focal point is distanced 0,42 mm from the ball surface 11b. When the working range is required to be 2 mm from the ball surface 11b, the image of the object C can be virtual or real, i.e., the image may occur at the same side of the opaque screen 7 or at the opposite side of it.

Again, a diaphragm 13 may be situated at the rear side of the ball-type lens 11 within the hole 12c. However, because of the high refractive index of sapphire the image of the diaphragm 13, i.e. the entrance purple, may also occur in the working range C1-C2. The angle of the beam reflected by the object C, when entering the ball lens 11, will vary rapidly with varying reading distance to the ball lens 11. Consequently, a rapidly varying abberation will occur. Thus, the spatial resolution of the wand scanner according to figure 5 will vary very rapidly, depending on the location of the object C. When the distance of the diaphragm 13 to the ball lens 11 is relatively large, the entrance purple will be close to the ball lens 11. In order to have an image of the diaphragm 13 outside the working range C1-C2, the diaphragm 13 is preferably located on the surface of the ball lens 11 within the hole 12c opposite to the working range C1-C2. The larger the diameter of the ball lens 11 and the smaller the opening of the diaphragm 13, the better is the quality of the image of object C. However, the ball lens 11 is also used for illuminating the object C. In other words, the front surface 11b of the ball lens 11 is used both for focusing the light beam to the object C and for receiving the light reflected by the object C.

The spatial resolution and the depth of the field both depend on the diameter of the ball lens 11. To read a barcode B properly within a working range C1-C2 of, for instance, 2 mm with a resolution not less than 0,2 mm, the diameter of the ball lens 11 is preferably not less than 5 mm, if it is made of sapphire or ruby.

In all the embodiments shown the sensor 9 is connected to suitable and evaluating electronics for evaluating the image of the object C. These electronics are not shown but are known to the person skilled in the art.

In all the embodiments according to the invention the sensor 9 and the light source 1 are arranged in a tandem-like configuration Thus, small sized wand scanners can be realized with the embodiments according to the present invention.

Commercially available photo-sensors may have a diameter less than 3 mm. Therefore, the hole in the illuminating lens of the present invention can have a diameter of less than 3 mm. When the outer diameter of the illuminating lens is, e.g., 10 mm, the illuminating efficiency will be about 81 % in the embodiments according to figures 2, 3, 4a, 4b, and 5 in which the photo sensor 9 blocks the light beam A generated by the light source 1 partly.

## Claims

1. An optical scanner comprising a light source (1) for generating a light beam (A), illuminating optics (2/10; 30/40; 20; 3; 35; 11/12) having an optical axis (15) and comprising a first surface (10a; 40a; 20a; 3a; 35a; 12a) arranged for receiving said light beam (A) from said light source (1), and a second surface (2b; 30b; 20b; 3b; 35b; 11b) arranged for transmitting said light beam (A) and focussing it to a working range on said optical axis (15), imaging optics (16; 30b/30d; 20b/20d; 5; 35e/35d; 11) located on said optical axis (15) and arranged for imaging light reflected by an object (C) to a sensor (9), both said light source (1) and said sensor (9) being located substantially on said optical axis (15) characterized in that the illuminating optics (2/10; 30/40; 20; 3; 35; 11/12) comprise a hole (2c; 30c/40c; 20c; 3c; 35c; 12c) around the optical axis (15) and the sensor (9) is supported by said hole.

2. An optical scanner according to claim 1 wherein the sensor (9) is supported by supporting means (7) gripped by said hole (2c).

3. An optical scanner according to claim 1 wherein the illuminating optics comprise a first lens (2; 30; 11) and a second lens (10; 40; 12), the second lens being nearest to said light source (1).

4. An optical scanner according to claim 3 wherein said first lens (2) comprises said hole (2c) for supporting said sensor (9).

5. An optical scanner according to claim 3 wherein said second lens (40; 12) comprises said hole (40c; 12c) for supporting said sensor (9).

6. An optical scanner according to claim 3 wherein said first lens is selected to be one of the following group of lenses: a ball lens (11), a Fresnel lens (17) and a holographic lens (17), and a gradient index lens (17).

7. An optical scanner according to claim 3 wherein said first lens is a ball lens (11) having a diameter of not less than 5 mm and being made of either sapphire or ruby.

8. An optical scanner according to claim 3 wherein said second lens is an axicon (10) designed to convert the light beam (A) received from the light source (1) into a conic shaped light beam (Ah) which is not intersected by the sensor (9).

9. An optical scanner according to claim 1 wherein the illuminating optics comprise a single, elongated lens (20; 3; 35).

10. An optical scanner according to claim 1 wherein the imaging optics comprise a separate imaging lens (16; 5) on said optical axis (15) between said hole (2c; 3c; 12c) and said working range.

11. An optical scanner according to claim 1 wherein the imaging optics comprise an imaging lens (30b/30d; 20b/20d; 35e/35d) on said optical axis (15) between said hole (40c; 20c; 35c) and said working range, the imaging lens being integrally made with the illuminating lens optics.

12. An optical scanner according to claim 1 wherein the imaging optics (18) are selected to be one of the following group of lenses: a Fresnel lens, a holographic lens, and a gradient index lens.

13. An optical scanner according to any of the preceding claims wherein a diaphragm (13) is located in said hole adjacent to said imaging optics.

14. An optical scanner according to any of the preceding claims wherein an opaque screen (7) with a small opening (8) on the optical axis (15) is disposed in said hole in front of said sensor (9).
